# EUROPÄISCHE PATENTSCHRIFT

(11) **EP 2 017 508 B1**
(45) Veröffentlichungstag und Bekanntmachung des Hinweises auf die Patenterteilung: **11.09.2013**
(21) Anmeldenummer: 08012345.8
(22) Anmeldetag: 09.07.2008
(51) Int. Cl.: F16J 15/06, F16J 15/02, F16J 15/10

(54) **Dichtungsanordnung und Verfahren zum Abdichten eines Zwischenraums sowie Bauteilgruppe zum Aufnehmen einer Dichtung**
Sealing arrangement and method for sealing off an interval as well as component assembly for holding a seal
Dispositif de joint et procédé d'étanchéification d'un espace intermédiaire ainsi que groupe composants de réception d'un joint

(30) Priorität: 16.07.2007 DE 102007032971
(43) Veröffentlichungstag der Anmeldung: 21.01.2009
(73) Patentinhaber: KNORR-BREMSE Systeme für Nutzfahrzeuge GmbH, 80809 München (DE)
(72) Erfinder: Reimann, Gunnar, 85253 Erdweg (DE)
(74) Vertreter: Schönmann, Kurt

(56) Entgegenhaltungen:
- EP-A1- 0 488 879
- EP-A1- 0 866 252
- DE-A1- 10 349 921
- DE-A1- 19 848 563
- GB-A- 2 338 989

## Beschreibung

Die Erfindung betrifft eine Dichtungsanordnung umfassend ein Bauteil mit einer Aussparung und eine Dichtung mit einem Dichtungskörper, der zumindest einen Dichtabschnitt umfasst, wobei der Dichtungskörper weiterhin zwei Führungsabschnitte in einem oberen Bereich und zwei andere Führungsabschnitte in einem unteren Bereich umfasst, wobei sich die vier Führungsabschnitte von dem Dichtabschnitt unterscheiden und der Dichtungskörper von den vier Führungsabschnitten in einem belasteten und/oder unbelasteten Zustand in der Aussparung geführt wird.

Weiterhin bezieht sich die Erfindung auf ein Verfahren zum Abdichten eines Zwischenraums anhand einer Dichtung, der durch zumindest zwei Bauteile ausgebildet wird, wobei die Dichtung einen Dichtungskörper umfasst, der zum Abdichten des Zwischenraums in den Zwischenraum platziert wird und der zumindest einen Dichtabschnitt umfasst, über den der Zwischenraum abgedichtet wird, wobei der Dichtungskörper weiterhin zwei Führungsabschnitte in einem oberen Bereich und zwei andere Führungsabschnitte in einem unteren Bereich umfasst, wobei sich die vier Führungsabschnitte von dem Dichtabschnitt unterscheiden und der Dichtungskörper von den vier Führungsabschnitten in einem belasteten und/oder unbelasteten Zustand in dem Zwischenraum geführt wird.

Darüber hinaus betrifft die Erfindung eine Bauteilbaugruppe und eine Verwendung der Dichtungsanordnung beziehungsweise der Bauteilgruppe.

Die DE 103 49 921 A1 beschreibt eine Dichtung mit einem Dichtungskörper, der zum Abdichten eines zwischen einem Abschlussdeckel und einem Gehäuse ausgebildeten Zwischenraums in einer Nut platzierbar ist und der eine leicht gewölbte Fläche des Unterteils sowie Dichtungswülste umfasst, über den der Zwischenraum abgedichtet wird.

Die EP 0 488 879 A1 beschreibt eine Dichtung mit einem Dichtungskörper, der zum Abdichten eines zwischen einem Deckel und einem Zylinderblock ausgebildeten Zwischenraums in eine Nut platzierbar ist und der eine axiale Rippe und einen Wulst umfasst, über den der Zwischenraum abgedichtet wird. Der Dichtungskörper umfasst zwei seitliche Flanken, mit denen der Dichtungskörper in der Nut geführt wird.

Die DE 198 48 563 A1 beschreibt eine Dichtung mit einem Paar rippenartiger, seitlich vorstehender Teile in einem oberen Bereich und zwei anderen rippenartiger, seitlich vorstehender Teile in einem unteren Bereich. Wenn die Dichtung in eine Dichtungs-Aufnahmerille eingesetzt wird, werden die vorstehenden Teile gegen eine Innenoberfläche der Dichtungs-Aufnahmerille gepresst. Zusätzlich zu den vorstehenden Teilen weist die Dichtung auch dichtende Oberflächen auf.

Die EP 0 866 252 A1 beschreibt eine Dichtung mit einem Dichtungskörper, der zum Abdichten zwischen einem Ventilschieber und einem Ventilkörper ausgebildeten Dichtungsbefestigungsnut in der Dichtungsbefestigungsnut platzierbar ist und Dichtlippen umfasst, über die die Dichtungsbefestigungsnut abgedichtet wird. Der Dichtungskörper weist in seinem unteren Bereich Flanken auf, die offensichtlich dazu ausgebildet sind, mit Flanken eines engen Bereichs so zusammenzuwirken, dass eine Verkantung des unteren Bereichs der Dichtung vermieden wird.

Die GB 2 338 989 A beschreibt eine Dichtung mit einem Dichtungskörper, der zum Abdichten zwischen einem Schwungradgehäuse und einem Zylinderblock in einer U-förmigen Nut platzierbar ist und an seiner Oberfläche zwei zentrale Wulste umfasst, über den der Zwischenraum abgedichtet wird. Der Dichtungskörper umfasst zwei Führungsabschnitte in einem oberen Bereich und zwei Führungsabschnitte in einem unteren Bereich. Der Dichtungskörper wird von den vier Führungsabschnitten in der Nut geführt.

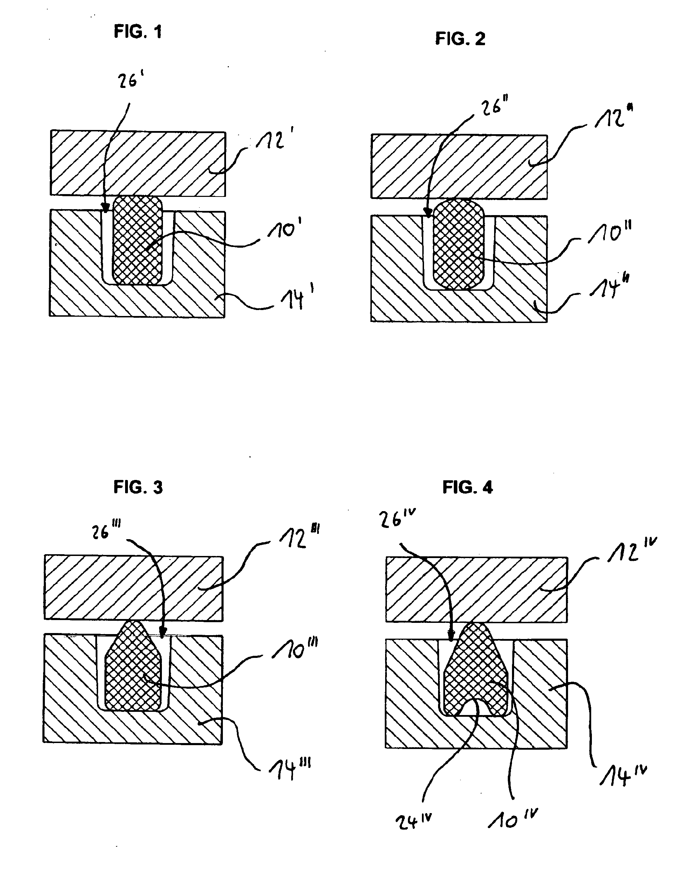

Gattungsgemäße Dichtungsanordnungen sind bereits aus dem Stand der Technik bekannt. Beispielsweise werden derartige Dichtungsanordnungen in Verbindung mit pneumatischen oder hydraulischen Systemen eingesetzt, bei denen unterschiedliche Druckniveaus in unterschiedlichen durch die Dichtung voneinander getrennten Druckräumen aufrechterhalten werden müssen. Die dabei verwendeten, dem Stand der Technik angehörenden Dichtungen können unterschiedliche Querschnitte aufweisen, wie insbesondere aus den Figuren 1 bis 4 ersichtlich ist. Weiterhin sind Dichtungen mit rechtecksähnlichen Querschnitten bekannt, ähnlich zu denen der Figuren 1 und 2, wobei insbesondere ein halbkreisförmiger Vorsprung als Dichtabschnitt gesehen im Dichtungsquerschnitt jeweils an einer Dichtungsoberseite und einer Dichtungsunterseite zur Abdichtung der Druckräume vorgesehen sein kann. Wie in den Figuren 1 bis 4 dargestellt ist, sind die Dichtungen 10^{I, II, III, IV} jeweils zwischen einem ersten Bauteil 12^{I, II, III, IV} und einem zweiten Bauteil 14^{I, II, III, IV} angeordnet. Dabei sind die Dichtungen 10^{I, II, III, IV} jeweils in eine entsprechende rechteckige oder rechtecksähnliche an dem zweiten Bauteil 14^{I, II, III, IV} ausgebildete Nut 26^{I, II, III, IV} eingesetzt. Die unterschiedlichen Dichtungsquerschnitte der Dichtungen 10^{I, II, III, IV} sind entsprechend für die rechteckig oder rechtecksähnlich gestalteten Nuten 26^{I, II, III, IV} ausgelegt, wobei diese Dichtungen 10^{I, II, III, IV} zumindest in einem unbelasteten Zustand, d.h. in einem nicht komprimierten und nicht dichtenden Zustand, innerhalb eines Spiels bezüglich von Nutwänden der Nuten 26^{I, II, III, IV} bewegbar aufgenommen sind, wie in den Figuren 1 bis 4 gezeigt ist. Weiterhin sind aus dem Stand der Technik auch Dichtungen bekannt, die auch bei belastetem Zustand nicht mit den Nutwänden in Berührung treten. Um eine ausreichende Dichtwirkung der Dichtungen 10^{I, II, III, IV} erzielen zu können, muss die Flächenpressung zwischen der entsprechenden Dichtung 10^{I, II, III, IV} und jeweils dem ersten und zweiten Bauteil 12^{I, II, III, IV} und 14^{I, II, III, IV} möglichst groß sein. Hingegen besteht weiterhin das Erfordernis, allgemein eine Streckenlast auf die ersten und zweiten Bauteile 12^{I, II, III, IV} und 14^{I, II, III, IV} so klein wie möglich zu halten, um die Belastung dieser Bauteile möglichst gering zu halten. Dieses Erfordernis steht einer möglichst großen Dichtwirkung entgegen. Somit kann der Fall auftreten, dass auch bei Dichtungen im belasteten und abdichtenden Zustand ein Spiel zwischen der belasteten Dichtung und den Nutwänden besteht. Bei den herkömmlichen Querschnittsformen der Nuten 26^{I, II, III, IV} der zweiten Bauteile 14^{I, II, III, IV} sowie der Dichtungen 10^{I, II, III, IV} wird ein erforderliches Ausgleichsvolumen, das aufgrund von auftretenden Toleranzen im Nutquerschnitt und im Dichtungsquerschnitt notwendig ist, um den maximalen Füllgrad der Nut nicht zu überschreiten, auf unterschiedliche Weisen zur Verfügung gestellt. Zum einen kann das Ausgleichsvolumen beispielsweise durch ein Verhältnis von Nutbreite (Abstand der gegenüberliegenden Nutwände) und Breite des Dichtungsquerschnitts festgelegt beziehungsweise bereitgestellt werden. Zum anderen kann auch eine entsprechende Aussparung 24^{IV} an der Dichtung 10^{IV} nahe dem Dichtabschnitt vorgesehen sein, wie dies beispielhaft bei der Dichtung 10^{IV} von Figur 4 dargestellt ist. Somit kann zumindest ein Materialausgleich der belasteten beziehungsweise komprimierten und abdichtenden Dichtung erfolgen. Unter Materialausgleich ist in diesem Zusammenhang eine Materialverlagerung der Dichtung in einen zur Verfügung gestellten Hohlraum (Aussparung oder Spiel zwischen Nutwänden und Dichtung) zu verstehen, die durch die geometrische Verformung der belasteten und abdichtenden Dichtung verursacht wird. Die vorwiegend auftretende geometrische Verformung der Dichtung beruht dabei vor allem auf der Inkompressibilität des Dichtungsmaterials.

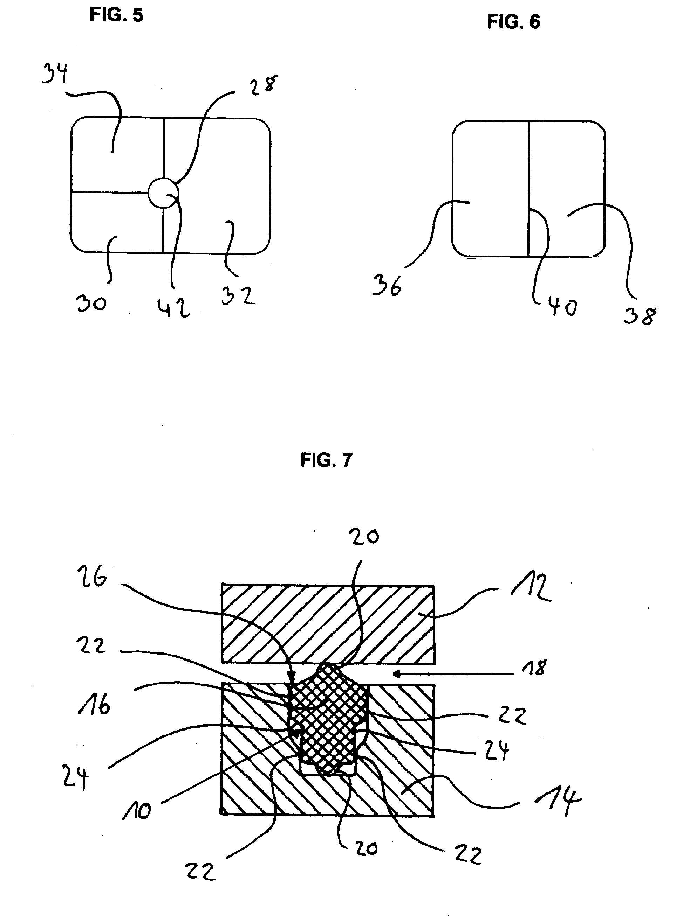

Je nach Komplexität des pneumatischen oder hydraulischen Systems können die Dichtungsverläufe der Dichtungen 10^{I, II, III, IV} variieren und dementsprechend unterschiedlich komplex sein. Die Figuren 5 und 6 zeigen in diesem Zusammenhang jeweils Beispiele für Dichtungsverläufe 28 und 40, um jeweils eine druckdichte Trennung eines Druckraums 42 von Druckräumen 30, 32, 34 sowie eines Druckraums 36 von einem Druckraum 38 zu erzielen. Insbesondere bei Druckräumen mit wechselnder Druckbeanspruchung, die über eine Dichtung abgedichtet werden, deren Verhältnis von Dichtungslänge beziehungsweise Dichtungsverlaufslänge zu Dichtungsquerschnitt relativ klein ist (beispielsweise der kreisförmige Druckraum 42 von Figur 5), muss aufgrund der mittigen Auslegung der Dichtung beziehungsweise des Dichtungsquerschnitts bezüglich der Nut beziehungsweise der Nutquerschnittskontur mit einer starken Abnahme der Dichtwirkung aufgrund einer radialen Ausdehnung der Dichtung bei Innendruck und relativ großer radialer Beweglichkeit der Dichtung in der Nut gerechnet werden. Wenn die Dichtung mit dem Dichtungsverlauf 38 beispielsweise so ausgelegt ist, dass sie außen an der Nut beziehungsweise an der radial äußeren Nutwand anliegt (beispielsweise am Außendurchmesser der Nut im Falle des kreisförmigen Druckraums 42), erfolgt bei hohem Außendruck (zum Beispiel ist der Druck in dem Druckraum 42 kleiner als die Drücke in den Druckräumen 30 und 34) eine Stauchung des ringförmigen Dichtungsquerschnitts, die zu einer verbesserten Dichtwirkung beitragen kann. Allerdings wird gleichzeitig ein Anschlusssteg beziehungsweise ein Abschnitt nahe einem Kreuzungspunkt zwischen dem Dichtungsverlauf 28 und beispielsweise dem die Druckräume 30, 34 trennenden Dichtungsverlauf lokal gestreckt. Dadurch tritt eine starke lokale Reduzierung des Dichtungsquerschnitts an diesem Abschnitt beziehungsweise dem Anschlusssteg auf, wodurch eine Abnahme der Dichtwirkung zwischen den Druckräumen 30 und 34 hervorgerufen wird. Weiterhin kann die Radialbewegung der Dichtung zu einer ungünstigen Lage, beispielsweise einer Verkippung der Dichtung, führen, so dass die Flächenpressung zwischen der Dichtung und den Bauteilen verringert wird. Demzufolge wird damit einhergehend auch die Dichtwirkung der Dichtung reduziert, so dass im schlechtesten Fall Undichtigkeiten zwischen den Druckräumen verursacht werden können. Ein weiterer Nachteil der dem Stand der Technik angehörenden Dichtungen 10^{I, II, III, IV} besteht darin, dass bereits bei der Montage der Dichtungen 10^{I, II, III, IV} deren Verkippung hervorgerufen werden kann, wodurch das pneumatische oder hydraulische System bereits nach der Montage Undichtigkeiten zwischen den jeweiligen Druckräumen aufweisen kann. Darüber hinaus sind die Dichtungen 10^{II, III, IV} der Figuren 2 bis 4 nicht dazu imstande, sich selbsttätig in eine Sollposition zurückbewegen. Ferner weist insbesondere die Dichtung 10^{IV} von Figur 4 zusätzlich den Nachteil auf, dass bei deren Verkippung Undichtigkeiten über den zentral, an der unteren Seite der Dichtung verlaufenden Kanal (Freiraum zwischen den Dichtlippen) zu einer Wechselwirkung mit einem beliebig weit entfernten Druckraum führen können (Drainagewirkung). Beispielsweise kann bei Verkippung der Dichtung 10^{IV} von Figur 4 auch eine Undichtigkeit zwischen den Druckräumen 30 und 32 über den Dichtungsverlauf 28 durch den Kanal hervorgerufen werden, ohne dass diese beiden Druckräume unmittelbar über den Dichtungsverlauf 28 aneinander angrenzen.

Der Erfindung liegt daher die Aufgabe zugrunde, die gattungemäßen Dichtungen, Verfahren zum Abdichten von Zwischenräumen, Bauteile mit Aussparungen sowie Bauteilgruppen derart weiterzubilden, dass die vorgenannten Nachteile zumindest teilweise überwunden werden können.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Dichtungsanordnung baut auf dem gattungsgemäßen Stand der Technik dadurch auf, dass der Dichtungskörper im Wesentlichen einen T-förmigen Querschnitt aufweist, wobei die zwei Führungsabschnitte in dem oberen Bereich durch Stirnflächen eines T-Balkens des T-förmigen Querschnitts und die zwei anderen Führungsabschnitte in dem unteren Bereich durch Seitenflanken eines T-Fußes des T-förmigen Querschnitts ausgebildet sind. Der Dichtungskörper umfasst zumindest einen sich von dem Dichtabschnitt unterscheidenden Führungsabschnitt, über den der Dichtungskörper in einem belasteten und/oder unbelasteten Zustand in dem Zwischenraum geführt wird. Diese Ausgestaltung des Dichtungskörpers beruht auf der Erkenntnis, eine Unterteilung des Dichtungskörpers in funktionell unterschiedliche Abschnitte vorzunehmen, um die vorgenannten Nachteile zu überwinden. Da der Dichtungskörper durch dessen Führungsabschnitt in dem Zwischenraum geführt wird, kann insbesondere eine Verkippung des Dichtungskörpers verhindert werden. Gleichzeitig dichtet der Dichtungskörper den Zwischenraum im belasteten und abdichtenden Zustand durch dessen Dichtabschnitte ab, während die Verkippung aufgrund der Führung verhindert wird. Anhand der funktionellen Unterteilung des Dichtungskörpers ergibt sich eine Geometrie des Dichtungskörpers, die die Stärken der bestehenden Querschnittsformen der dem Stand der Technik angehörenden Dichtungen vereint, jedoch ohne die zuvor beschriebenen Nachteile aufzuweisen. Der Querschnitt des Dichtungskörpers wird vorzugsweise in unterschiedliche Funktionsabschnitte unterteilt, nämlich in den Dichtabschnitt, den Führungsabschnitt und in einen Ausgleichsabschnitt. Diese funktionale Trennung ermöglicht eine optimale und individuelle Gestaltung der einzelnen Abschnitte des Dichtungskörpers. Insbesondere in dem Fall, bei dem die Dichtung in eine an einem der Bauteile ausgebildete Nut eingesetzt ist, ist auch die Nutquerschnittsgeometrie an die Querschnittsform der erfindungsgemäßen Dichtung funktionell angepasst; damit beruht die Wirkung der Querschnittsformen auf dem Zusammenspiel von Nut- und Dichtungsquerschnitt. Vorzugsweise wird der Dichtabschnitt des Dichtkörpers im Querschnitt kreisförmig oder halbkreisförmig jeweils an der Dichtungsober- und -unterseite ausgebildet. Dadurch kann die Flächenpressung unter anderem auch über weite Bereiche durch die Wahl des Kopf- und Fußradius an der Ober- und Unterseite der Dichtung eingestellt werden. Darüber hinaus kann der Dichtungskörper über den Führungsabschnitt eng geführt werden, da der Führungsabschnitt unabhängig von dem Ausgleichsabschnitt ist. Vorzugsweise wird der Dichtungskörper derart ausgeführt, dass er zumindest zwei Führungsabschnitte und zwei Dichtabschnitte umfasst, wobei die Führungsabschnitte in einem größtmöglichen Abstand voneinander angeordnet sind. Beispielsweise kann der eine Führungsabschnitt in einem oberen Bereich des Dichtungskörpers nahe dem oberen Dichtabschnitt liegen, während der andere Führungsabschnitt in einem unteren Bereich des Dichtungskörpers nahe dem unteren Dichtabschnitt vorgesehen ist. Zum Beispiel können die Führungsabschnitte direkt angrenzend an einer jeweiligen Dichtfläche des entsprechenden Dichtabschnitts vorgesehen sein. Damit wird die Führung des Dichtungskörpers durch die zwei voneinander unabhängigen Führungsbereiche gewährleistet. Somit wird ein Verkippen des Dichtungskörpers aufgrund dessen Führungsabschnitts unterbunden. Dabei ist die erfindungsgemäße Dichtungsanordnung für alle Dichtungsverläufe mit mindestens zwei Stoßbereichen geeignet, d.h. für mindestens zwei verschiedene Druckräume. Der Dichtungsverlauf kann völlig beliebig sein.

Die erfindungsgemäße Dichtungsanordnung kann in vorteilhafter Weise derart weitergebildet werden, dass der Dichtungskörper weiterhin zumindest einen Ausgleichsabschnitt umfasst, der benachbart zum Führungsabschnitt sowie zum Dichtabschnitt angeordnet und in der Form einer Aussparung ausgebildet ist. Dadurch wird ermöglicht, dass bei belasteter, zusammengedrückter und somit abdichtender Dichtung ein Materialausgleich in den durch die Aussparung zur Verfügung gestellten Raum zwischen dem Dichtungskörper und beispielsweise den Nutwänden erfolgen kann.

Die erfindungsgemäße Dichtungsanordnung wird so verwirklicht, dass der Dichtungskörper im Wesentlichen einen T-förmigen Querschnitt aufweist. Eine derartige Querschnittsgeometrie in T-Form mit entsprechend ausgestalteter Dichtnut, in die der Dichtungskörper eingesetzt werden kann, trägt zur Verbesserung der Dichtwirkung bei komplexen Dichtungsverläufen mit mindestens zwei unterschiedlichen, gegeneinander abzudichtenden Druckräumen bei. Selbstverständlich können beliebige Formen für den Dichtungskörper verwendet werden, solange die vorstehend erläuterte funktionale Trennung der Abschnitte des Dichtungskörpers vorgenommen wird.

Weiterhin kann die erfindungsgemäße Dichtungsanordnung derart ausgebildet werden, dass der Dichtungskörper in eine den Zwischenraum zumindest teilweise ausbildende Nut in einem oder beiden Bauteilen platzierbar ist, wobei der Führungsabschnitt des Dichtungskörpers in der Nut im belasteten und/oder unbelasteten Zustand des Dichtungskörpers geführt wird. Dadurch wird insbesondere ein verbessertes Toleranzausgleichsvermögen erzielt, das die entsprechende Nut größere Toleranzen aufweisen kann. Auch können dadurch kostengünstigere Fertigungsverfahren erzielt werden. Weiterhin kann die Montage des Dichtungskörpers durch relativ großzügige Einführschrägen an der Nut stark vereinfacht werden. Darüber hinaus kann durch partielles Aufdicken beziehungsweise Verstärken des Dichtungskörpers in den Stoßbereichen zum einen die Führung weiter verbessert und zum anderen ein Herausfallen des Dichtungskörpers aus der Nut, zum Beispiel bei einer Vormontage, verhindert werden.

In diesem Zusammenhang ist es besonders vorteilhaft, die erfindungsgemäße Dichtung so zu verwirklichen, dass der Führungsabschnitt des Dichtungskörpers beidseitig an Nutwänden der Nut im belasteten und/oder unbelasteten Zustand des Dichtungskörpers geführt wird. Im Falle von mehreren Führungsabschnitten des Dichtungskörpers je Nutwand können diese beispielsweise von dem Ausgleichsabschnitt, insbesondere der Aussparung, voneinander beabstandet sein.

Das erfindungsgemäße Verfahren baut auf dem gattungsgemäβen Stand der Technik dadurch auf, dass der Dichtungskörper mit im Wesentlichen T-förmigen Querschnitt in den Zwischenraum platziert wird, wobei die zwei Führungsabschnitte in dem oberen Bereich durch Stirnflächen eines T-Balkens des T-förmigen Querschnitts und die zwei anderen Führungsabschnitte in dem unteren Bereich durch Seitenflanken eines T-Fußes des T-förmigen Querschnitts ausgebildet sind.Dadurch ergeben sich die im Zusammenhang mit der erfindungsgemäßen Dichtung erläuterten Eigenschaften und Vorteile in gleicher oder ähnlicher Weise, weshalb zur Vermeidung von Wiederholungen auf die entsprechenden Ausführungen im Zusammenhang mit der erfindungsgemäßen Dichtung verwiesen wird.

Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit der erfindungsgemäßen Dichtung verwiesen wird.

Bevorzugt wird das erfindungsgemäße Verfahren so weitergebildet, dass der Dichtungskörper durch zumindest einen benachbart zum Führungsabschnitt sowie zum Dichtabschnitt und in der Form einer Aussparung ausgebildeten Ausgleichsabschnitt einen Materialausgleich aufgrund einer Verformung des Dichtungskörpers im belasteten Zustand bewirkt.

Das erfindungsgemäße Verfahren wird derart umgesetzt, dass der Dichtungskörper mit im Wesentlichen T-förmigen Querschnitt in den Zwischenraum platziert wird.

Darüber hinaus kann das erfindungsgemäße Verfahren so weitergebildet werden, dass der Dichtungskörper in eine den Zwischenraum zumindest teilweise ausbildende Nut in einem oder beiden Bauteilen platziert wird, wobei der Führungsabschnitt des Dichtungskörpers in der Nut im belasteten und/oder unbelasteten Zustand des Dichtungskörpers geführt wird.

Im Rahmen dieser Weiterbildung kann das erfindungsgemäße Verfahren derart ausgeführt werden, dass der Führungsabschnitt des Dichtungskörpers beidseitig an Nutwänden der Nut im belasteten und/oder unbelasteten Zustand des Dichtungskörpers geführt wird.

Die Aussparung des Bauteils ist derart gestaltet, dass sie den erfindungsgemäßen Dichtungskörper an den vier sich von einem Dichtabschnitt des Dichtungskörpers unterscheidenden Führungsabschnitten des Dichtungskörpers führt.

Auch in diesem Fall ergeben sich die im Zusammenhang mit der erfindungsgemäßen Dichtung erläuterten Eigenschaften und Vorteile in gleicher oder ähnlicher Weise, weshalb zur Vermeidung von Wiederholungen auf die entsprechenden Ausführungen im Zusammenhang mit der erfindungsgemäßen Dichtungsanordnung verwiesen wird. Gleiches gilt ebenso für die bevorzugten Ausführungen des erfindungsgemäßen Bauteils.

Das erfindungsgemäße Bauteil kann in vorteilhafter Weise derart weitergebildet werden, dass die Aussparung eine Nut ist.

Weiterhin kann das erfindungsgemäße Bauteil so ausgebildet werden, dass zumindest Abschnitte von Nutwänden der Nut den Dichtungskörper zumindest teilweise führen.

Darüber hinaus kann das erfindungsgemäße Bauteil derart verwirklicht werden, dass zumindest ein Abschnitt eines Nutgrunds der Nut mit dem Dichtabschnitt des Dichtungskörpers in Berührung steht.

Die erfindungsgemäße Bauteilbaugruppe umfasst zumindest eine erfindungsgemäße Dichtungsanordnung und zumindest ein weiteres Bauteil, wobei das weitere Bauteil nahe dem ersten Bauteil angeordnet ist, um einen durch die erfindungsgemäße Dichtungsanordnung abgedichteten Zwischenraum auszubilden. Dadurch werden die im Zusammenhang mit der erfindungsgemäßen Dichtungsanordnung genannten Vorteile auf gleiche oder ähnliche Weise erzielt.

Die Erfindung wird nun mit Bezug auf die begleitenden Zeichnungen anhand bevorzugter Ausführungsformen beispielhaft erläutert.

Es zeigen:
- Figur 1: ein erstes Beispiel einer dem Stand der Technik angehörenden Dichtung im Querschnitt;
- Figur 2: ein zweites Beispiel einer dem Stand der Technik angehörenden Dichtung im Querschnitt;
- Figur 3: ein drittes Beispiel einer dem Stand der Technik angehörenden Dichtung im Querschnitt;
- Figur 4: ein viertes Beispiel einer dem Stand der Technik angehörenden Dichtung im Querschnitt;
- Figur 5: einen Dichtungsverlauf einer Dichtung;
- Figur 6: einen weiteren Dichtungsverlauf einer Dichtung; und
- Figur 7: eine erfindungsgemäße Dichtung im Querschnitt.

Figur 7 zeigt eine erfindungsgemäße Dichtung 10 im Querschnitt. Die erfindungsgemäße Dichtung 10 umfasst einen Dichtungskörper 16, der zwischen einem ersten Bauteil 12 und einem zweiten Bauteil 14 platziert beziehungsweise angeordnet und insbesondere in einer in dem zweiten Bauteil 14 ausgebildeten Nut 26 eingesetzt ist. Somit dichtet der Dichtungskörper 16 einen Zwischenraum 18 ab, der durch das erste und zweite Bauteil 12, 14 einschließlich der Nut 26 ausgebildet wird. Das erste und zweite Bauteil 12 und 14 können dabei beliebige Bauteile eines pneumatischen oder hydraulischen Systems sein, die zusammen mit der Dichtung 10 zumindest zwei unterschiedliche Druckräume voneinander druckdicht trennen. Wie aus Figur 7 ersichtlich ist, ist der Dichtungskörper 16 im Wesentlichen in T-förmiger Gestalt und umfasst zwei Dichtabschnitte 20 an dessen Ober- und Unterseite, die in der Form eines Halbkreises gesehen im Dichtungskörperquerschnitt ausgebildet sind. Ein Dichtabschnitt 20 des Dichtungskörpers 16 (der obere Dichtabschnitt 20 in Figur 7) steht mit dem ersten Bauteil 12 in druckdichter Berührung, wohingegen der zweite Dichtabschnitt 20 des Dichtungskörpers 16 (der untere Dichtabschnitt 20 in Figur 7) mit einem Nutgrund der Nut 26 in druckdichter Berührung steht. Weiterhin umfasst der Dichtungskörper 16 vier Führungsabschnitte 22, die jeweils mit Nutwänden der Nut 26 im belasteten und/oder unbelasteten Zustand des Dichtungskörpers 16 in Berührung stehen. Anhand der Führungsabschnitte 22 ist der Dichtungskörper 16 entlang der Nutwände bewegbar, jedoch nicht um eine Achse senkrecht zum Querschnitt des Dichtungskörpers 16 verdrehbar beziehungsweise verkippbar. Benachbart zu den Führungsabschnitten 22 des Dichtungskörpers 16 sind zwei Ausgleichsabschnitte 24 in der Form einer Aussparung an dem Dichtungskörper 24 gesehen im Querschnitt des Dichtungskörpers 16 vorgesehen. Insbesondere sind die Ausgleichsabschnitte 24 jeweils zwischen zwei Führungsabschnitten 22 des Dichtungskörpers 16 vorgesehen, die von der gleichen Nutwand jeweils geführt werden. Anhand der so angeordneten Ausgleichsabschnitte 24 kann der Dichtungskörper 16 zum einen innerhalb eines gewissen Spiels in Richtung des Nutgrunds zusammengedrückt und gleichzeitig geführt werden. Zum anderen stellen diese Ausgleichsabschnitte 24 bei Belastung der Dichtung 10, beispielsweise bei Druckbelastung der Dichtung 10 durch Zusammenfügen des ersten und zweiten Bauteils 12, 14, einen Materialausgleichraum aufgrund der Aussparung zur Verfügung. Dadurch kann bei zusammengedrücktem, komprimiertem beziehungsweise belastetem Dichtungskörper 16 ein Materialausgleich in Richtung der Aussparung erfolgen.

Im Zusammenhang mit der Durchführung des erfindungsgemäßen Verfahrens zur Abdichtung des Zwischenraums 18 zwischen dem ersten und zweiten Bauteil 12, 14 wird der Dichtungskörper 16 der erfindungsgemäßen Dichtung 10 zunächst in die Nut 26 eingesetzt. Dabei wird der Dichtungskörper 16 über dessen Führungsabschnitte 22 im Zusammenspiel mit den Nutwänden der Nut 26 weiter in die Nut 26 eingeführt. Nach dem Einführen des Dichtungskörpers 16 in die Nut 26 werden das erste und zweite Bauteil 12, 14 aneinandergeführt beziehungsweise zusammengefügt, wodurch die Dichtabschnitte 20 des Dichtkörpers 16 mit dem ersten Bauteil 12 und dem zweiten Bauteil 14 in Berührung treten. Je weiter das erste und zweite Bauteil 12, 14 aneinander geführt wird, umso größer wird eine Flächenpressung zwischen dem ersten, zweiten Bauteil 12, 14 und dem jeweiligen Dichtabschnitt 20 des Dichtungskörpers 16. Damit erhöht sich auch die Dichtungswirkung der erfindungsgemäßen Dichtung 10. Weiterhin ermöglichen die Ausgleichsabschnitte 24 beim Zusammenfügen des ersten und zweiten Bauteils 12, 14 zunächst eine weitere Bewegung der Führungsabschnitte 22 in Richtung des Nutgrunds der Nut 26. Zusätzlich wird der durch die Ausgleichsabschnitte 24 geschaffene Raum zwischen Dichtungskörper 16 und den Nutwänden der Nut 16 zum Materialausgleich des Dichtungskörpers 16 bei zusammengedrückter Dichtung 10 verwendet. Ein Verkippen des Dichtungskörpers 16 wird aufgrund der Führungsabschnitte 22 während des Zusammenfügens der Bauteile 12, 14 fortwährend unterbunden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10^{I,II,III,IV}: Dichtung
- 12^{I,II,III,IV}: erstes Bauteil
- 14^{I,II,III,IV}: zweites Bauteil
- 24 ^{IV}: Ausparung
- 26^{I,II,III,IV}: Nut
- 10: Dichtung
- 12: erstes Bauteil
- 14: zweites Bauteil
- 16: Dichtungskörper
- 18: Zwischenraum
- 20: Dichtabschnitt
- 22: Führungsabschnitt
- 24: Ausgleichsabschnitt
- 26: Nut
- 28: Dichtungsverlauf
- 30: Druckraum
- 32: Druckraum
- 34: Druckraum
- 36: Druckraum
- 38: Druckraum
- 40: Dichtungsverlauf
- 42: Druckraum

## Patentansprüche

1. Dichtungsanordnung umfassend ein Bauteil (14) mit einer Aussparung (26) und eine Dichtung (10) mit einem Dichtungskörper (16) zum Abdichten eines zwischen zumindest dem Bauteil (14) und einem weiteren Bauteil (12) ausbildbaren Zwischenraums (18), der durch die zwei Bauteile (12,14) einschließlich der Aussparung (26) gebildet wird, und, der zumindest einen Dichtabschnitt (20) umfasst über den der Zwischenraum (18) im eingebauten Zustand abgedichtet wird, wobei der Dichtungskörper (16) weiterhin zwei Führungsabschnitte (22) in einem oberen Bereich und zwei andere Führungsabschnitte (22) in einem unteren Bereich umfasst, wobei sich die vier Führungsabschnitte (22) von dem Dichtabschnitt (20) unterscheiden und der Dichtungskörper (16) von den vier Führungsabschnitten (22) in einem belasteten und/oder unbelasteten Zustand in der Aussparung (26) geführt wird, **dadurch gekennzeichnet, dass** der Dichtungskörper (16) im Wesentlichen einen T-förmigen Querschnitt aufweist, wobei die zwei Führungsabschnitte (22) in dem oberen Bereich durch Stirnflächen eines T-Balkens des T-förmigen Querschnitts und die zwei anderen Führungsabschnitte (22) in dem unteren Bereich durch Seitenflanken eines T-Fußes des T-förmigen Querschnitts ausgebildet sind.

2. Dichtungsanordnung nach Anspruch 1, **dadurch gekennzeichnet, dass** die Aussparung (26) eine Nut (26) ist.

3. Dichtungsanordnung nach Anspruch 1 oder 2, **dadurch gekennzeichnet, dass** der Dichtungskörper (16) weiterhin zumindest einen Ausgleichsabschnitt (24) umfasst, der benachbart zu einem Führungsabschnitt (22) sowie zum Dichtabschnitt (20) angeordnet und in der Form einer Aussparung ausgebildet ist.

4. Dichtungsanordnung nach Anspruch 2 oder 3, **dadurch gekennzeichnet, dass** zumindest ein Abschnitt eines Nutgrunds der Nut (26) mit dem Dichtabschnitt (20) des Dichtungskörpers (16) in Berührung steht.

5. Bauteilbaugruppe mit zumindest einer Dichtungsanordnung nach einem der Ansprüche 1 bis 4, **dadurch gekennzeichnet, dass** die Bauteilebaugruppe zumindest ein weiteres Bauteil (12) umfasst, wobei das weitere Bauteil (12) nahe dem Bauteil (14) angeordnet ist, um einen durch die Dichtung (10) abgedichteten Zwischenraum (18) auszubilden.

6. Verwendung der Vorrichtung nach einem der Ansprüche 1 bis 5, wobei der Dichtungsköper (16) zum Abdichten eines Zwischenraums (18) zwischen dem Bauteil (14) und einem weiteren Bauteil (12), in eine den Zwischenraum (18) zumindest teilweise ausbildende Nut (26) in einem oder beiden Bauteilen platziert ist.

7. Verwendung der Dichtungsanordnung (10) nach Anspruch 6, **dadurch gekennzeichnet, dass** der Führungsabschnitt (22) des Dichtungskörpers (16) beidseitig an Nutwänden der Nut (26) im belasteten und/oder unbelasteten Zustand des Dichtungskörpers (16) geführt wird.

8. Verfahren zum Abdichten eines Zwischenraums (18) anhand einer Dichtung (10), der durch zumindest zwei Bauteile (12, 14) ausgebildet wird, wobei die Dichtung (10) einen Dichtungskörper (16) umfasst, der zum Abdichten des Zwischenraums (18) in den Zwischenraum (18) platziert wird und der zumindest einen Dichtabschnitt (20) umfasst, über den der Zwischenraum (18) abgedichtet wird, wobei der Dichtungskörper (16) weiterhin zwei Führungsabschnitte (22) in einem oberen Bereich und zwei andere Führungsabschnitte (22) in einem unteren Bereich umfasst, wobei sich die vier Führungsabschnitte (22) von dem Dichtabschnitt (20) unterscheiden und der Dichtungskörpers (16) von den vier Führungsabschnitten (22) in einem belasteten und/oder unbelasteten Zustand in dem Zwischenraum (18) geführt wird, **dadurch gekennzeichnet, dass** der Dichtungskörper (16) mit im Wesentlichen T-förmigem Querschnitt in den Zwischenraum (18) platziert wird, wobei die zwei Führungsabschnitte (22) in dem oberen Bereich durch Stirnflächen eines T-Balkens des T-förmigen Querschnitts und die zwei anderen Führungsabschnitte (22) in dem unteren Bereich durch Seitenflanken eines T-Fußes des T-förmigen Querschnitts ausgebildet sind.

9. Verfahren nach Anspruch 8, **dadurch gekennzeichnet,**
**dass** der Dichtungskörper (16) durch zumindest einen benachbart zum Führungsabschnitt (22) sowie zum Dichtabschnitt (20) und in der Form einer Aussparung ausgebildeten Ausgleichsabschnitt (24) einen Materialausgleich aufgrund einer Verformung des Dichtungskörpers (16) im belasteten Zustand bewirkt.

10. Verfahren nach Anspruch 8 oder 9, **dadurch gekennzeichnet, dass** der Dichtungsköper (16) in eine den Zwischenraum (18) zumindest teilweise ausbildende Nut (26) in einem oder beiden Bauteilen platziert wird, wobei der Führungsabschnitt (22) des Dichtungskörpers (16) in der Nut (26) im belasteten und/oder unbelasteten Zustand des Dichtungskörpers (16) geführt wird.

11. Verfahren nach Anspruch 10, **dadurch gekennzeichnet, dass** der Führungsabschnitt (22) des Dichtungskörpers (16) beidseitig an Nutwänden der Nut (26) im belasteten und/oder unbelasteten Zustand des Dichtungskörpers (16) geführt wird.

## Claims

1. Seal arrangement, comprising a component (14) having a recess (26) and a seal (10) with a seal body (16), for sealing a gap (18) which can form between at least the component (14) and a further component (12), which is represented by the two components (12, 14) including the recess (26) and which includes at least one sealing section (20) by means of which the gap (18) is sealed in the assembled state, wherein the body (16) further comprises two guide sections (22) in an upper region and two further guide sections (22) in a lower region, wherein the four guide sections (22) differ from the sealing section (20) und the seal body (16) is guided by the four guide sections (22) in the recess (26) in a loaded and/or a no-load condition, **characterised in that** the seal body (16) has a substantially T-shaped cross-section, wherein the two guide sections (22) in the upper region are represented by end faces of a T-bar of the T-shaped cross-section and the two further guide sections (22) in the lower region are represented by lateral flanks of a T-foot of the T-shaped cross-section.

2. Seal arrangement according to claim 1, **characterised in that** the recess (26) is a groove.

3. Seal arrangement according to claim 1 or 2, **characterised in that** the seal body (16) further comprises at least one compensation section (24), which is located adjacent to a guide section (22) and to the sealing section (20) and which is designed in the form of a recess.

4. Seal arrangement according to claim 2 or 3, **characterised in that** at least one section of a bottom of the groove (26) is in contact with the sealing section (20) of the seal body (16).

5. Component assembly comprising at least one seal arrangement according to any of claims 1 to 4, **characterised in that** the component assembly comprises at least one further component (12), the further component (12) being arranged close to the component (14) to form a gap (18) sealed by the seal (10).

6. Use of the device according to any of claims 1 to 5, wherein the seal body (16) is placed into a groove (26) in one or both of the components, which groove at least partially forms the gap (18), in order to seal a gap (18) between the component (14) and a further component (12).

7. Use of the seal arrangement (10) according to claim 6, **characterised in that** the guide section (22) of the seal body (16) is guided on both sides on walls of the groove (26) in the loaded and/or the no-load condition of the seal body (16).

8. Method for sealing a gap (18) using a seal (10), which gap (18) is formed by at least two components (12, 14), wherein the seal (10) comprises a seal body (16) which is placed into the gap (18) for sealing the gap (18) and which comprises at least one sealing section (20) by means of which the gap (18) is sealed, wherein the seal body (16) further comprises two guide sections (22) in an upper region and two further guide sections (22) in a lower region, wherein the four guide sections (22) differ from the sealing section (20) und the seal body (16) is guided by the four guide sections (22) in the recess (26) in a loaded and/or a no-load condition, **characterised in that** the seal body (16) with its substantially T-shaped cross-section is placed into the gap (18), wherein the two guide sections (22) in the upper region are represented by end faces of a T-bar of the T-shaped cross-section and the two further guide sections (22) in the lower region are represented by lateral flanks of a T-foot of the T-shaped cross-section.

9. Method according to claim 8, **characterised in that** the seal body (16) effects a material compensation based on a deformation of the seal body (16) in the loaded condition by means of at least one compensation section (24), which is located adjacent to a guide section (22) and to the sealing section (20) and which is designed in the form of a recess.

10. Method according to claim 8 or 9, **characterised in that** the Seal body (16) is placed into a groove (26) in one or both of the components, which groove at least partially forms the gap (18), the guide section (22) of the seal body (16) being guided in the groove (26) in the loaded and/or the no-load condition of the seal body (16).

11. Method according to claim 10, **characterised in that** the guide section (22) of the seal body (16) is guided on both sides on walls of the groove (26) in the loaded and/or the no-load condition of the seal body (16).

## Revendications

1. Dispositif de joint comprenant un élément (14) ayant un évidement (26) et un joint (10) ayant un corps (16) de joint pour rendre étanche un espace (18) intermédiaire pouvant se former entre au moins un élément (14) et un autre élément (12), espace qui est formé par les deux éléments (12, 14) y compris l'évidement (26) et qui comprend au moins une partie (20) d'étanchéité par laquelle l'espace (18) intermédiaire est rendu étanche à l'état monté, le corps (16) de joint comprenant en outre deux parties (22) de guidage dans une zone supérieure et deux autres parties (22) de guidage dans une zone inférieure, les quatre parties (22) de guidage se distinguant de la partie (20) d'étanchéité et le corps (16) de joint étant guidé dans l'évidement (26) par les quatre parties (22) de guidage dans un état chargé et/ou déchargé, **caractérisé en ce que** le corps (16) de joint a une section transversale sensiblement en forme de T, les deux parties (22) de guidage étant formées dans la zone supérieure par des surfaces frontales d'une barre de T de la section transversale en forme de T, et les deux autres parties (22) de guidage étant formées dans la zone inférieure par des flancs latéraux d'un pied de T de la section transversale en forme de T.

2. Dispositif de joint suivant la revendication 1, **caractérisé en ce que** l'évidement (26) est une rainure (26).

3. Dispositif de joint suivant les revendications 1 ou 2, **caractérisé en ce que** le corps (16) de joint comprend en outre au moins une partie (24) de compensation, qui est disposée au voisinage d'une partie (22) de guidage ainsi que de la partie (20) d'étanchéité, et qui est sous la forme d'un évidement.

4. Dispositif de joint suivant les revendications 2 ou 3, **caractérisé en ce qu'**au moins une partie du fond de la rainure (26) est en contact avec la partie (20) d'étanchéité du corps (16) du joint.

5. Module d'élément ayant au moins un dispositif de joint suivant l'une des revendications 1 à 4, **caractérisé en ce que** le module d'élément comprend au moins un autre élément (12), l'autre élément (12) étant disposé à proximité de l'élément (14) pour constituer un espace (18) intermédiaire rendu étanche par le joint (10).

6. Utilisation du dispositif suivant l'une des revendications 1 à 5, dans laquelle le corps (16) du joint est placé, pour rendre un étanche un espace (18) intermédiaire entre l'élément (14) et un autre élément (12), dans une rainure (26) constituant au moins en partie l'espace (18) intermédiaire et ménagée dans l'un des éléments ou dans les deux éléments.

7. Utilisation du dispositif (10) de joint suivant la revendication 6, **caractérisé en ce que** la partie (22) de guidage du corps (16) du joint est guidée à l'état chargé/ou à l'état déchargé du corps (16) du joint des deux côtés sur des parois de la rainure (26).

8. Procédé pour rendre étanche un espace (18) intermédiaire au moyen d'un joint (10) qui est formé d'au moins deux éléments (12, 14), le joint (10) comprenant un corps (16) de joint qui est placé dans l'espace (18) intermédiaire pour rendre étanche l'espace (18) intermédiaire et qui comprend au moins une partie (20) d'étanchéité par laquelle l'espace (18) intermédiaire est rendu étanche, le corps (16) de joint comprenant en outre deux parties (22) de guidage dans une zone supérieure et deux autres parties (22) de guidage dans une zone inférieure, les quatre parties (22) de guidage se distinguant de la partie (20) d'étanchéité et le corps (16) de joint étant guidé dans l'évidement (26) par les quatre parties (22) de guidage dans un état chargé et/ou déchargé, **caractérisé en ce que** le corps (16) de joint a une section transversale sensiblement en forme de T, les deux parties (22) de guidage étant formées dans la zone supérieure par des surfaces frontales d'une barre de T de la section transversale en forme de T, et les deux autres parties (22) de guidage étant formées dans la zone inférieure par des flancs latéraux d'un pied de T de la section transversale en forme de T.

9. Procédé suivant la revendication 8, **caractérisé en ce que** le corps (16) du joint provoque, par au moins une partie (24) de compensation voisine de la partie (22) de guidage ainsi que de la partie (20) d'étanchéité et sous la forme d'un évidement, une compensation de matière en raison d'une déformation du corps (16) du joint à l'état chargé.

10. Procédé suivant les revendications 8 ou 9, **caractérisé en ce que** le corps (16) du joint est placé dans une rainure (26) de l'un ou des deux éléments formant au moins en partie l'espace (18) intermédiaire, la partie (22) de guidage du corps (16) du joint étant guidée dans la rainure (26) à l'état chargé/ou déchargé du corps (16) du joint.

11. Procédé suivant la revendication 10, **caractérisé en ce que** la partie (22) de guidage du corps (16) d'étanchéité est guidée à l'état chargé/ou déchargé du corps (16) du joint des deux côtés sur les parois de la rainure (26).
